(19) Europäisches Patentamt
European Patent Office
Office européen des brevets

(11) **EP 4 525 430 A1**

(12) **EUROPEAN PATENT APPLICATION**
published in accordance with Art. 153(4) EPC

(43) Date of publication:
**19.03.2025  Bulletin 2025/12**

(21) Application number: **23827394.0**

(22) Date of filing: **25.05.2023**

(51) International Patent Classification (IPC):
*H04N 7/14* (2006.01)       *H04N 9/31* (2006.01)
*G06T 3/60* (2024.01)       *H04N 7/15* (2006.01)
*H04N 5/262* (2006.01)       *G03B 17/54* (2021.01)

(52) Cooperative Patent Classification (CPC):
**G03B 17/54; G06T 3/60; H04N 5/262; H04N 7/14;
H04N 7/15; H04N 9/31**

(86) International application number:
**PCT/KR2023/007185**

(87) International publication number:
**WO 2023/249274 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022  KR 20220076884
07.09.2022  KR 20220113302**

(71) Applicant: **Samsung Electronics Co., Ltd.
Suwon-si, Gyeonggi-do 16677 (KR)**

(72) Inventors:
• **SEONG, Kibum
 Suwon-si Gyeonggi-do 16677 (KR)**
• **LEE, Weonhee
 Suwon-si Gyeonggi-do 16677 (KR)**

• **GOO, Bonseuk
 Suwon-si Gyeonggi-do 16677 (KR)**
• **KIM, Youngtae
 Suwon-si Gyeonggi-do 16677 (KR)**
• **SOH, Byungseok
 Suwon-si Gyeonggi-do 16677 (KR)**
• **LEE, Kisung
 Suwon-si Gyeonggi-do 16677 (KR)**
• **LEE, Youngchol
 Suwon-si Gyeonggi-do 16677 (KR)**
• **JANG, Yongseok
 Suwon-si Gyeonggi-do 16677 (KR)**

(74) Representative: **Walaski, Jan Filip et al
Venner Shipley LLP
200 Aldersgate
London EC1A 4HD (GB)**

(54) **ELECTRONIC DEVICE WHICH INCLUDES PROJECTION UNIT FOR PROJECTING VIDEO AND WHICH PROVIDES VIDEO CALL FUNCTION, AND CONTROL METHOD THEREFOR**

(57)     An electronic device for providing a video call function, and a control method therefor are provided. The present electronic device comprises: a projection unit; a camera; a sensor for obtaining information about the distance to an external object; a memory for storing at least one instruction; and at least one processor which is connected to the projection unit, the camera, the sensor and the memory, and which is for controlling the electronic device. The at least one processor executes the at least one instruction so that, if a video call function is executed, a user is captured through the camera, and thus first user video is obtained. The at least one processor calculates a horizontal correction angle and a vertical correction angle on the basis of the first user video, the rotational angle of the camera, the projection angle of the projection unit, and a sensing value obtained through the sensor. The at least one processor obtains frontal video of the user on the basis of the first user video, the horizontal correction angle, and the vertical correction angle. The at least one processor controls the projection unit so that a video call screen including the obtained frontal video of the user is projected.

# FIG. 1

**Description**

[TECHNICAL FIELD]

The present disclosure relates to an electronic device including a projection unit for projecting a video and a control method therefor, and more particularly, to an electronic device for providing a video call function through a projection unit and a control method therefor.

[BACKGROUND ART]

Recently, with the development of communication technology, a video call function that may perform a video call with an external terminal device has become widespread. In particular, the video call function is provided not only by user terminals such as smartphones but also by various electronic devices such as TVs in the home.

based on performing the video call with the external terminal device, the electronic device may capture a user video using a camera and perform the video call using the captured user video. However, in the case of electronic devices such as projectors, the camera is not located in a direction that a user is looking, but is located at side or back surfaces of the user. Therefore, when performing the video call using the electronic device such as the projector, a face of a user is captured from the side surface, not the front surface, so there is a limitation that an opponent may not perform the video call while looking at the face of the user.

[DISCLOSURE]

[TECHNICAL SOLUTION]

According to an aspect of the present disclosure, an electronic device for providing a video call function includes: a projection unit; a camera; a sensor configured to obtain information about a distance from an external object; a memory configured to store at least one instruction; and at least one processor configured to be connected to the projection unit, the camera, the sensor, and the memory, and control the electronic device. The at least one processor is configured to execute the at least one instruction to obtain a first user video by capturing a user through the camera based on the video call function being executed. The at least one processor calculates a horizontal correction angle and a vertical correction angle based on the first user video, a rotational angle of the camera, a projection angle of the projection unit, and a sensing value obtained through the sensor. The at least one processor obtains a frontal video of the user based on the first user video, the horizontal correction angle, and the vertical correction angle. The at least one processor controls the projection unit so that a video call screen including the obtained frontal video of the user is projected.

According to another aspect of the present disclosure, a control method for an electronic device for providing a video call function that includes a projection unit projecting a video includes: obtaining a first user video by capturing a user through a camera based on the video call function being executed; calculating a horizontal correction angle and a vertical correction angle based on the first user video, a rotational angle of the camera, a projection angle of the projection unit, and a sensing value obtained through the sensor of the electronic device; obtaining a frontal video of the user based on the first user video, the horizontal correction angle, and the vertical correction angle; and projecting a video call screen including the obtained frontal video of the user through the projection unit.

According to still another aspect of the present disclosure, a computer-readable medium storing a program for executing a control method for an electronic device for providing a video call function that includes a projection unit projecting a video, in which the control method includes: obtaining a first user video by capturing a user through a camera based on the video call function being executed; calculating a horizontal correction angle and a vertical correction angle based on the first user video, a rotational angle of the camera, a projection angle of the projection unit, and a sensing value obtained through the sensor of the electronic device; obtaining a frontal video of the user based on the first user video, the horizontal correction angle, and the vertical correction angle; and projecting a video call screen including the obtained frontal video of the user through the projection unit.

[DESCRIPTION OF DRAWINGS]

FIG. 1 is a diagram for describing an electronic device for providing a video call function according to an embodiment of the present disclosure.
FIG. 2A is a block diagram illustrating a configuration of an electronic device according to an embodiment of the present disclosure.
FIG. 2B is a diagram illustrating an appearance of an electronic device according to an embodiment of the present disclosure.
FIG. 3 is a diagram for describing a method for correcting a user video captured by the electronic device while performing a video call according to an embodiment of the present disclosure.
FIG. 4 is a block diagram illustrating a configuration for correcting the user video while performing the video call according to an embodiment of the present disclosure.
FIG. 5A is a diagram for describing a method for calculating a first height from a floor to a center of a projection surface according to an embodiment of the present disclosure.

FIG. 5B is a diagram for describing a method for calculating a second height from the floor to a center of a face of a user according to an embodiment of the present disclosure.

FIG. 6 is a diagram for describing a method for calculating a horizontal correction angle according to an embodiment of the present disclosure.

FIG. 7 is a diagram for describing a method for calculating a vertical correction angle according to an embodiment of the present disclosure.

FIG. 8 is a drawing for describing a method for obtaining a frontal video using the horizontal correction angle and the vertical correction angle according to an embodiment of the present disclosure.

FIG. 9 is a drawing for describing a method for providing an avatar video according to an embodiment of the present disclosure.

FIGS. 10A and 10B are diagrams for describing a method for moving an electronic device by identifying whether it is located in a space where the video call is possible according to an embodiment of the present disclosure.

FIG. 11 is a flowchart for describing a control method for an electronic device for providing a video call function according to an embodiment of the present disclosure.

FIG. 12 is a block diagram illustrating in detail a configuration of the electronic device according to an embodiment of the present disclosure.

FIG. 13 is a perspective view illustrating an appearance of the electronic device according to an embodiment of the present disclosure.

[MODE FOR INVENTION]

Hereinafter, various embodiments of the present disclosure are described. However, this is not intended to limit the technology of the present disclosure to specific embodiments, and various modified embodiments of the embodiments of the present disclosure may undergo various transformations and may have multiple embodiments, and specific embodiments are illustrated in the drawings and described in detail in the detailed description. However, it is to be understood that the disclosure is not limited to specific embodiments, but include various modifications, equivalents, and/or alternatives according to embodiments of the disclosure. Throughout the accompanying drawings, similar components will be denoted by similar reference numerals.

In describing the present disclosure, when it is determined that a detailed description for the known functions or configurations related to the present disclosure may unnecessarily obscure the gist of the present disclosure, the detailed description therefor will be omitted.

In addition, the following embodiments may be modified in multiple different forms, and the scope and spirit of the disclosure are not limited to the following embodiments. Rather, these embodiments make the disclosure thorough and complete, and are provided to completely transfer a technical spirit of the disclosure to those skilled in the art.

Terms used in the disclosure are used only to describe specific embodiments rather than limiting the scope of the disclosure. Singular forms include plural forms unless the context clearly indicates otherwise.

In the specification, an expression "have", "may have", "include", "may include", or the like, indicates existence of a corresponding feature (for example, a numerical value, a function, an operation, a component such as a part, or the like), and does not exclude existence of an additional feature.

In the disclosure, an expression "A or B", "at least one of A and/or B", or "one or more of A and/or B", may include all possible combinations of items enumerated together. For example, "A or B", "at least one of A and B", or "at least one of A or B" may indicate all of 1) a case where at least one A is included, 2) a case where at least one B is included, or 3) a case where both of at least one A and at least one B are included.

Expressions "first" or "second" used in the disclosure may indicate various components regardless of a sequence and/or importance of the components, will be used only to distinguish one component from the other components, and do not limit the corresponding components.

When it is mentioned that any component (for example, a first component) is (operatively or communicatively) coupled with/to or is connected to another component (for example, a second component), it is to be understood that any component is directly coupled to another component or may be coupled to another component through the other component (for example, a third component).

On the other hand, when it is mentioned that any component (for example, a first component) is "directly coupled" or "directly connected" to another component (for example, a second component), it is to be understood that the other component (for example, a third component) is not present between any component and another component.

An expression "configured (or set) to" used in the disclosure may be replaced by an expression "suitable for", "having the capacity to" "designed to", "adapted to", "made to", or "capable of" depending on a situation. A term "configured (or set) to" may not necessarily mean "specifically designed to" in hardware.

Instead, in some situations, an expression "apparatus configured to" may mean that the apparatus may "~capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory device.

**In** embodiments, a 'module' or a '~er/or' may perform at least one function or operation, and be implemented by hardware or software or be implemented by a combination of hardware and software. **In** addition, a plurality of "modules" or a plurality of "~ers/ors" may be integrated in at least one module and be implemented by at least one processor except for a 'module' or an '~er/or' that needs to be implemented by specific hardware.

Meanwhile, various elements and regions in the drawings are schematically illustrated. Therefore, the spirit of the disclosure is not limited by relatively sizes or intervals illustrated in the accompanying drawings.

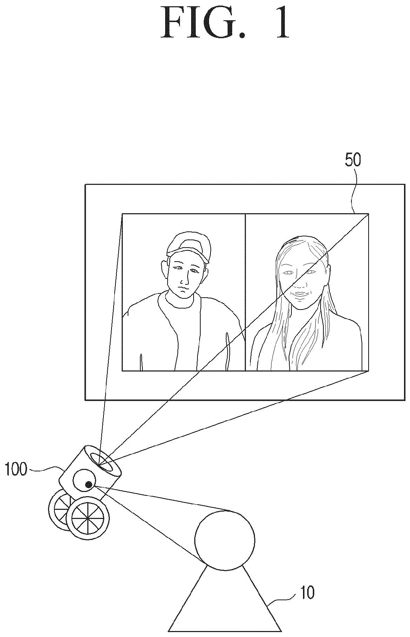

FIG. 1 is a diagram for describing an electronic device for providing a video call function according to an embodiment of the present disclosure. An electronic device 100 illustrated in FIG. 1 may be a video projection device such as a projector that projects a video onto a wall or a screen.

According to an embodiment of the present disclosure, based on the video call function being executed, the electronic device 100 may capture a user 10 through a 360° rotatable camera to obtain a first user video. **In** this case, a first user video may be a video captured from a side surface of the user 10 based on the user 10 looking at a projection surface (particularly, the opponent) 50.

In addition, the electronic device 100 may obtain a frontal video in which the user 10 looks at a front surface using the first user video. Specifically, the electronic device 100 may calculate a horizontal correction angle and a vertical correction angle based on a rotational angle of the camera, a projection angle of a projection unit, and a sensing value obtained through a sensor. In this case, the horizontal correction angle is an angle for correcting the first user video by rotating the first user video in a horizontal direction, and the vertical correction angle is an angle for correcting a second user video by rotating the second user video in a vertical direction. The electronic device 100 may obtain the frontal video of the user 10 based on the first user video, the horizontal correction angle, and the vertical correction angle.

As illustrated in FIG. 1, the electronic device 100 may project a video call screen including the obtained frontal video of the user 10 onto the projection surface 50. As a result, the user 10 may provide the video call using the frontal video even if the electronic device 100 captures the user 10 from a side direction of the user 10, thereby providing a more natural video call screen.

In addition, the electronic device 100 may capture the second user video while performing the video call. In addition, the electronic device 100 may analyze the second user video to correct the frontal video in order to reflect the natural movement (e.g., head rotation, lip movement, etc.) of the user 10 in the frontal video. Specifically, the electronic device 100 may analyze feature points (e.g., eyes, nose, mouth, etc.) of the second user video to obtain information about a rotational angle of a face of a user or the movement of the feature points, thereby correcting the frontal video.

Therefore, the electronic device 100 may provide a natural user video by correcting the frontal video to reflect the movement of user while performing the video call.

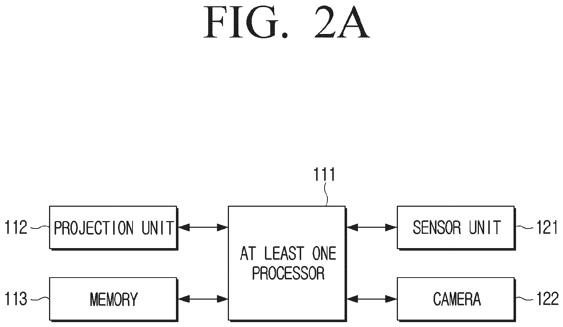

FIG. 2A is a block diagram illustrating a configuration of the electronic device according to an embodiment of the present disclosure. As illustrated in FIG. 2A, the electronic device 100 may include a projection unit 112, a memory 113, a sensor unit 121, a camera 122, and at least one processor 111. However, the configuration of the electronic device 100 illustrated in FIG. 2A is only an embodiment, and other configurations may be added or some configurations may be omitted.

The projection unit 112 is a configuration for projecting light to the outside to express a video. The projection unit 112 may include various detailed components such as a light source, a projection lens, and a reflector. The operation method and detailed configuration of the projection unit 112 will be described in detail again in the following section. In particular, while the electronic device 100 performs the video call with the external device, the projection unit 112 may project the video call screen onto the projection surface.

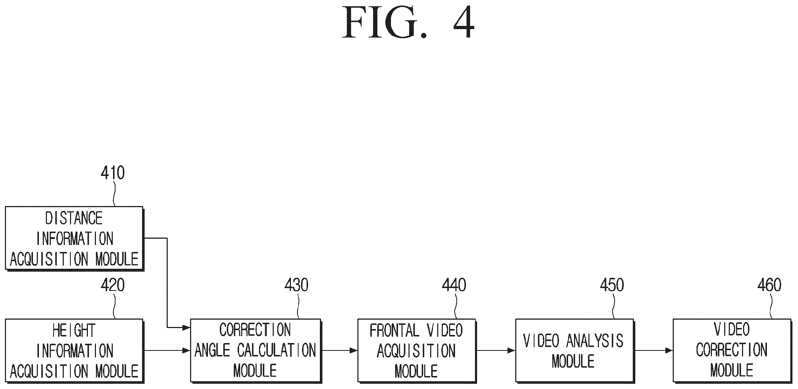

The memory 113 may store at least one instruction for controlling the electronic device 100. In particular, the memory 120 may store data required for a module for correcting the user video while performing the video call to perform various operations. The module for correcting the user video while performing the video call may include a distance information acquisition module 410, a height information acquisition module 420, a correction angle calculation module 430, a frontal video acquisition module 440, a video analysis module 450, and a video correction module 460 as illustrated in FIG. 4.

Meanwhile, the memory 113 may include a nonvolatile memory that may maintain stored information even if the supply of power is interrupted and a volatile memory that requires the continuous supply of power to maintain the stored information. The module for correcting the user video while performing the video call may be stored in the nonvolatile memory.

The sensor unit 121 is configured to obtain status information of the electronic device 100 or information about the surrounding environment of the electronic device 100. In particular, the sensor unit 121 may include at least one distance sensor for obtaining information about a distance between the electronic device 100 and an object. In this case, at least one distance sensor may be located around the camera 122 or around the projection unit 112, but is not limited thereto.

At least one distance sensor may obtain a sensing value for obtaining information about a distance between the electronic device 100 and a center of the projection surface or a sensing value for obtaining information about a distance between the electronic device 100 and a center of the face of the user 10.

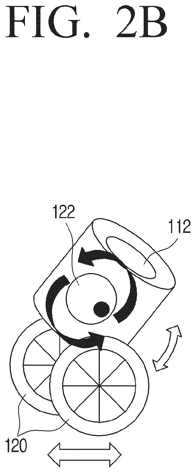

The camera 122 may be arranged on one side surface of the electronic device 100 to capture a still or moving video. In particular, as illustrated in FIG. 2B, the camera 122 may be arranged on a side surface of the cylindrical electronic device 100. In addition, the camera 122 may be rotatable 360°. Accordingly, the camera 122 may capture a user located around the electronic device 100.

At least one processor 111 may be electrically connected to the memory 113 to control the overall function and operation of the electronic device 100. Based on an event for performing the video call or an event for correcting a user video while performing the video call is detected, at least one processor 111 may load data for performing various operations for the module for correcting the user video while performing the video call stored in the nonvolatile memory to perform various operations into the volatile memory. At least one processor 111 may perform various operations by using various modules based on the data loaded into the volatile memory. Here, the loading means an operation of loading and storing the data stored in the nonvolatile memory into the volatile memory so that at least one processor 111 may access.

In particular, at least one processor 111 executes at least one instruction stored in the memory 113, so, based on the video call function being executed, it captures the user through the camera 122 to obtain the first user video. At least one processor 111 calculates the horizontal correction angle and the vertical correction angle based on the first user video, the rotational angle of the camera 122, the projection angle of the projection unit 112, and the sensing value obtained through the sensor unit 121. At least one processor 111 obtains frontal video of the user on the basis of the first user video, the horizontal correction angle, and the vertical correction angle. At least one processor 111 controls the projection unit 112 to project the video call screen including the obtained frontal video of the user.

In particular, at least one processor 111 may obtain information about a first distance between the electronic device 100 and the center of the projection surface based on a first sensing value obtained through the sensor unit 121. In particular, at least one processor 111 may obtain information about a second distance between the electronic device 100 and the face of the user based on a second sensing value obtained through the sensor unit 121. In addition, at least one processor 111 may calculate the horizontal correction angle based on the information about the first distance, the information about the second distance, and the first rotational angle of the camera 122. In this case, the first rotational angle of the camera 122 is an angle at which the camera 122 rotates left and right with respect to the center of the projection surface.

In addition, at least one processor 111 may obtain information about a first height from the floor to the center of the projection surface based on the projection angle of the projection unit 112 and the second sensing value obtained through the sensor unit 121. At least one processor 111 may obtain information about a second height from the floor to the face of the user based on the second rotational angle of the camera 122 and the second sensing value obtained through the sensor unit 121. In this case, the second rotational angle of the camera 122 is an angle at which the camera 122 rotates up and down with respect to the floor. At least one processor 111 may obtain information about a third distance between the face of the user and the center of the projection surface based on the information about the first distance, the information about the second distance, and the second rotational angle of the camera. At least one processor 111 may calculate the vertical correction angle based on the information about the first height, the information about the second height, and the information about the third distance.

In addition, at least one processor 111 may rotate the first user video in a first direction based on the horizontal correction angle, and rotate the first user video in a second direction based on the vertical correction angle, thereby obtaining the frontal video of the user.

In addition, at least one processor 111 may obtain the frontal video of the user by inputting the first user video, the horizontal correction angle, and the vertical correction angle to a trained neural network model.

In addition, at least one processor 111 may generate an avatar video based on the frontal video of the user and control the projection unit 112 to project the generated avatar video onto the video call screen.

In addition, at least one processor 111 may identify whether the electronic device 100 is located in the space where the video call is possible based on at least one of the first user video, the rotational angle of the camera, the projection angle of the projection unit, and the sensing value obtained through the sensor unit 121. In addition, based on the electronic device 100 being not located in the space where the video call is possible, at least one processor 111 may control the driving unit 120 to move to the space where the video call is possible.

In addition, at least one processor 111 may obtain the second user video using the camera 122 while performing the video call. In addition, at least one processor 111 may calculate the rotational angle of the face of the user based on the second user video. At least one processor 111 may rotate the frontal video of the user based on the calculated rotational angle of the face of the user.

In addition, based on multiple users being included in the first user video, at least one processor 111 may identify a speaker among the multiple users and calculate the horizontal correction angle and the vertical correction angle based on the identified speaker.

Meanwhile, the electronic device 100 may further include a driving unit 120 as illustrated in FIG. 2B. The driving unit 120 is a component for moving the electronic device 100 and may include a motor, a wheel, etc. In addition, the electronic device 100 may adjust the projection angle of the projection unit 112 by rotating a body of the electronic device 100 and may adjust the rotational angle of the camera 122 arranged on the body of the electronic device 100 by 360°.

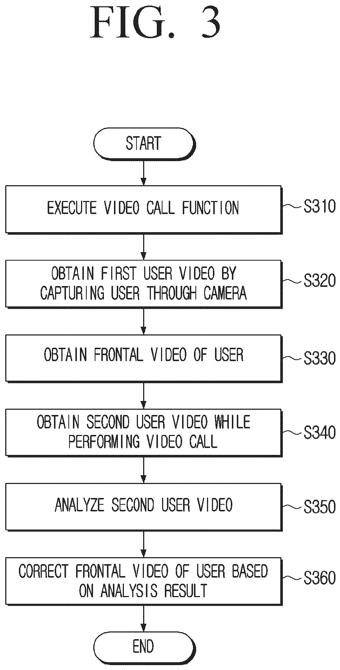

FIG. 3 is a diagram for describing a method for correcting a user video captured by the electronic device while performing the video call according to an embodiment of the present disclosure.

First, the electronic device 100 may execute the video call function (S310). Specifically, based on a video call request being received from the outside or a user command to execute a video call application is input, the electronic device 100 may execute the video call function.

The electronic device 100 may capture a user through the camera 122 to obtain the first user video (S320). In this case, the first user video is a video captured based on the user looking at the projection screen (the opponent of the video call screen). For example, the electronic device 100 may capture the user based on a guidance message (e.g., please look at a front surface) to look at the projection surface being output before starting the video call, thereby obtaining the first user video. For example, the electronic device 100 may detect a greeting message (e.g., hello) with the opponent of the video call and capture a user based on the greeting message beingb performed, thereby obtaining the first user video.

The electronic device 100 may obtain the frontal video of the user (S330). **In** detail, the electronic device 100 may calculate the horizontal correction angle and the vertical correction angle based on the first user video, the rotational angle of the camera 122, the projection angle of the projection unit 112, and the sensing value obtained through the sensor unit 121. The electronic device 100 may obtain the frontal video of the user based on the first user video, the horizontal correction angle, and the vertical correction angle. This will be described in detail below with reference to FIGS. 4 to 8. The electronic device 100 may control the projection unit 112 to project the video call screen including the obtained frontal video of the user.

The electronic device 100 may obtain the second user video while performing the video call (S340).

The electronic device 100 may analyze the second user video (S350). Specifically, the electronic device 100 may obtain information about a face rotation, lip movement, and eye movement of a user by analyzing the movement of the feature points (e.g., eyes, nose, mouth, etc.) of the user included in the second user video.

The electronic device 100 may correct the frontal video of the user based on the analysis result (S360). Specifically, the electronic device 100 may rotate the frontal video of the user based on the information about the face rotation of the user, and correct the frontal video of the user according to the change in the face of the user based on the information about the lip movement or eye movement.

As described above, through the video correction process, the electronic device 100 may perform the video call with the external user through the frontal video even if the user is not captured from the front surface.

Hereinafter, the method for correcting a user video while performing the video call will be described in more detail with reference to FIGS. 4 to 8. FIG. 4 is a block diagram illustrating a configuration for correcting the user video while performing the video call according to an embodiment of the present disclosure. As illustrated in FIG. 4, the electronic device 100 may include the distance information acquisition module 410, the height information acquisition module 420, the correction angle calculation module 430, the frontal video acquisition module 440, the video analysis module 450, and the video correction module 460.

Meanwhile, the electronic device 100 may obtain the first user video. In this case, the first user video may be the video captured from the side surface of the user 10 based on the user 10 looking at the projection surface (particularly, the opponent) 50. In particular, based on the electronic device 100 capturing the first user video, the camera 122 may rotate so that the face of the user 10 is located at the center of the first user video.

The distance information acquisition module 410 may obtain distance information between the electronic device 100 and the object based on the sensing values obtained from at least one distance sensor included in the sensor unit 121. Specifically, the distance information acquisition module 410 may obtain information about a first distance $a_1$ between the electronic device 100 and the center of the projection surface based on the first sensing value obtained through at least one distance sensor. In addition, the distance information acquisition module 410 may obtain information about a second distance $a_2$ between the electronic device 100 and the face of the user based on the second sensing value obtained through at least one distance sensor.

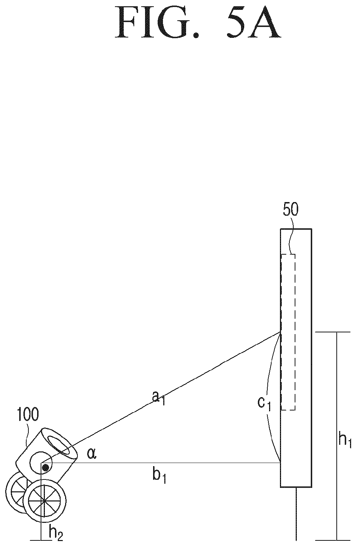

The height information acquisition module 420 may calculate a first height $h_1$ from the floor to the center of the projection surface and a second height $h_3$ from the floor to the face of the user. Specifically, the height information acquisition module 420 may obtain a projection angle $\alpha$ of the projection unit 112 through the rotational angle of the body of the electronic device 100 from a ground surface of the electronic device 100. In this case, the projection angle $\alpha$ of the projection unit 112 may be the angle a1 between a line segment b1 having a shortest distance between the projection unit 112 and the projection surface 50 and a line segment connecting the projection unit 112 and the center of the projection surface. Information about the first distance $a_1$ may be obtained using the second sensing value obtained through at least one distance sensor. In addition, the height information acquisition module 420 may obtain information about the first height $h_1$ from the floor to the center of the projection surface 50 based on the information about the projection

angle $\alpha$ of the projection unit 112 and the first distance a1. Referring to FIG. 5A, the height information acquisition module 420 may calculate $c_1$ through the following Equation 1.

[Equation 1]

$$c_1 = a_1 \sin \alpha$$

Meanwhile, a height $h_2$ from the floor to the camera 122 of the electronic device may be pre-stored.

Therefore, the height information acquisition module 420 may calculate the first height $h_1$ from the floor to the center of the projection surface 50 by the following Equation 2.

[Equation 2]

$$h_1 = c_1 + h_2$$

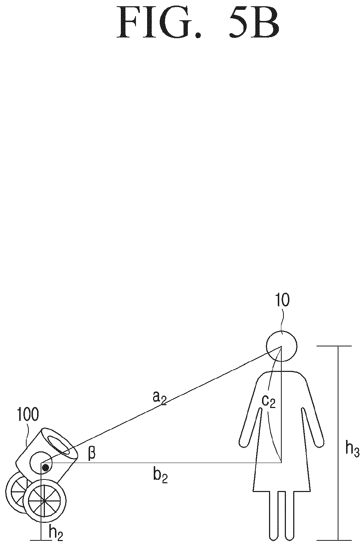

In addition, the height information acquisition module 420 may obtain a second rotational angle $\beta$ of the camera rotating upward with respect to the floor, and may obtain the information about the second distance $a_2$ based on the second sensing value obtained through at least one distance sensor. In addition, the height information acquisition module 420 may obtain the information about the second height $h_3$ from the floor to the face of the user 10 based on the information about the second rotational angle $\beta$ of the camera and the second distance $a_2$. Referring to FIG. 5B, the height information acquisition module 420 may calculate $c_2$ by the following Equation 3.

[Equation 3]

$$c_2 = a_2 \sin \beta$$

Meanwhile, the height $h_2$ from the floor to the camera 122 of the electronic device may be pre-stored.

Therefore, the height information acquisition module 420 may calculate the first height $h_1$ from the floor to the face of the user 10 by the following Equation 4.

[Equation 4]

$$h_3 = c_2 + h_2$$

The correction angle calculation module 430 may obtain the horizontal correction angle and the vertical correction angle based on the distance information obtained by the distance information acquisition module 410 and the height information obtained by the height information acquisition module 420.

Specifically, the correction angle calculation module 430 may obtain the first distance $a_1$ and the second distance $a_2$ obtained by the distance information acquisition module 410 and a first rotational angle $\gamma$ of the camera. In this case, the first rotational angle $\gamma$ of the camera may mean the angle at which the camera 122 rotates based on the direction in which the camera 122 faces the center of the projection surface.

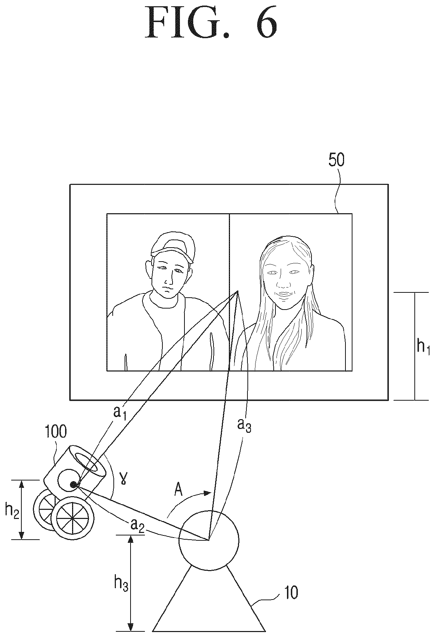

Referring to FIG. 6, the correction angle calculation device 430 may calculate the horizontal correction angle A by the following Equations 5 and 6. In this case, $a_3$ may be a third distance between the face of the user 10 and the center of the projection surface 50.

[Equation 5]

$$a_3 = \sqrt{(a_1 \sin\gamma)^2 + (a_2 - a_1 \cos\gamma)^2}$$

[Equation 6]

$$A = \cos^{-1}\left(\frac{a_2^2 + a_3^2 - a_1^2}{2a_2 a_3}\right)$$

In addition, the correction angle calculation module 430 may calculate the vertical correction angle B by using the first height $h_1$ and the second height $h_3$ and the third distance $a_3$ obtained by the height information acquisition module 420.

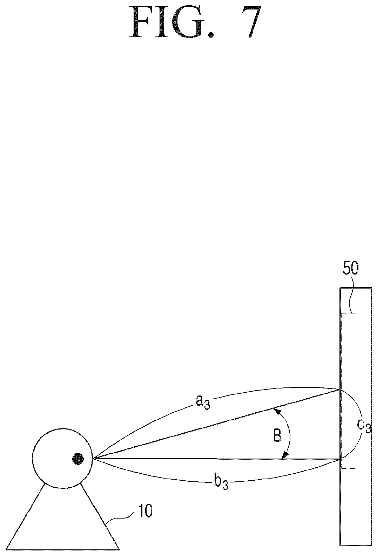

Referring to FIG. 7, the correction angle calculation device 430 may calculate a vertical correction angle B by the following Equations 7 and 8.

[Equation 7]

$$c_3 = h_1 - h_3$$

[Equation 8]

$$B = \sin^{-1}\left(\frac{c_3}{a_3}\right)$$

The frontal video acquisition module 440 may obtain the frontal video of the user by using the first user video, the horizontal correction angle A, and the vertical correction angle B. In this case, the frontal video may be the video captured by the camera located at the center (or the area where the opponent is displayed) of the projection surface based on the user looking at the center (or the opponent) of the projection surface.

Specifically, the frontal video acquisition module 440 may obtain the frontal video of the user by rotating the first user video in the first direction based on the horizontal correction angle A and rotating the first user video in the second direction based on the vertical correction angle B. As an example, the frontal video acquisition module 440 may perform 3D modeling on the first user video to obtain a 3D user video. In addition, the frontal video acquisition module 440 may obtain the 3D frontal video by rotating the 3D user video in the first direction based on the horizontal correction angle A and rotating the 3D user video in the second direction based on the vertical correction angle B. In addition, the frontal video acquisition module 440 may obtain a two-dimensional (2D) frontal video of a user based on the 3D frontal video. As another example, the frontal video acquisition module 440 may obtain the frontal video of the user by rotating the first user video in the first direction based on the horizontal correction angle A and rotating the first user video in the second direction based on the vertical correction angle B. In this case, the frontal video acquisition module 440 may generate a portion of the rotating frontal video that is not captured using the pre-stored user video.

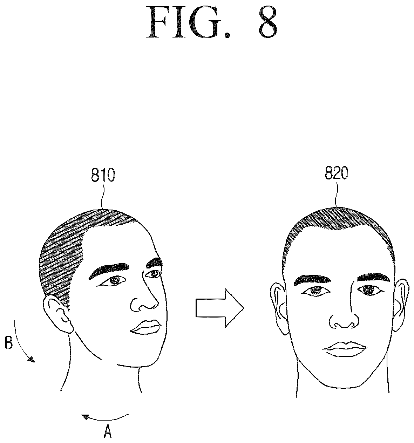

In addition, the frontal video acquisition module 440 may rotate the first user video (or the 3D user video) based on the direction in which the electronic device 100 captures the user. In particular, the frontal video acquisition module 440 may rotate the first user video (or the 3D user video) in an opposite direction to the direction in which the electronic device 100 captures the user. For example, as illustrated on the left side of FIG. 8, based on the electronic device 100 capturing the user in the lower right direction, the frontal video acquisition module 440 may rotate a first user video 810 in the left direction by the horizontal correction angle A and rotate the first user video 810 in the lower direction by the vertical correction angle B. Accordingly, the frontal video acquisition module 440 may obtain a frontal video 820, as illustrated on the right side of FIG. 8.

In addition, the frontal video acquisition module 440 may obtain the frontal video of the user by inputting the first user video, the horizontal correction angle A, and the vertical correction angle B to the trained neural network model. In this case, the neural network model may be an artificial intelligence model trained to input the user video, the horizontal correction angle, and the vertical correction angle and output the frontal video of the user.

In addition, the frontal video acquisition module 440 may compare the pre-stored frontal video of the user with the obtained frontal video to determine whether additional correction is necessary. For example, based on the feature point locations (e.g., eyes, nose, mouth) of the pre-stored frontal video of the user and the feature point locations (e.g., eyes, nose, mouth) of the obtained frontal video being different, the frontal video acquisition module 440 may determine that the additional correction is necessary. In this case, the frontal video acquisition module 440 may re-capture the first user video and obtain the frontal video of the user again.

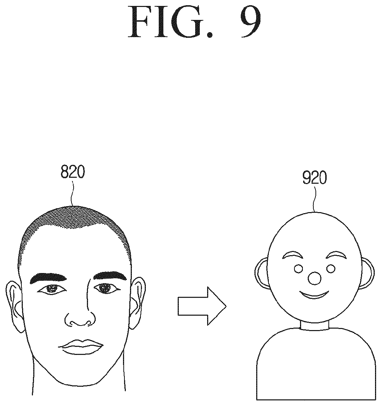

In addition, the frontal video acquisition module 440 may project the video call screen including the obtained frontal video onto the projection surface through the projection unit 112, and transmit the obtained frontal video to the opponent terminal of the video call. In this case, the frontal video acquisition module 440 may change the obtained frontal video to the avatar video according to the user input. For example, as illustrated in FIG. 9, the frontal video acquisition module 440 may change the frontal video 820 to an avatar video 920, project the video call screen including the changed avatar video 920 onto the projection surface through the projection unit 112, and transmit the obtained frontal video to the opponent terminal of the video call.

The video analysis module 450 may analyze the second user video captured while performing the video call. In this case, the video analysis module 450 may obtain the information about the rotation of the face of the user, the movement of the lips, eyes, etc., by analyzing the movement of the feature points (e.g., eyes, nose, mouth) included in the second user video. For example, based on all the plurality of feature points included in the second user video moving in one direction, the video analysis module 450 may detect the rotation of the face of the user and calculate the rotational angle of the face of the user according to the movement distance of the feature points. In addition, based on only some of the feature points (e.g., feature points related to a mouth) among the plurality of feature points moving, the video analysis module 450 may obtain the information about the movement of the lips of the user.

The video correction module 460 may correct the frontal video of the user based on the analysis result of the video analysis module 450. Specifically, the video correction module 460 may correct the frontal video of the user based on the information about the rotation of the face of the user, or the movement of the lips, eyes, etc., obtained by the video analysis module 450. For example, based on it being analyzed that the user rotates his/her face 20° to the left, the video correction module 460 may correct the frontal video of the user to rotate 20° to the left. For example, based on it being analyzed that the lip movement of the user exists, the video correction module 460 may correct the frontal video of the user to reflect the lip movement of the user.

In other words, the video correction module 460 may provide the user with a more natural video call experience by correcting the frontal video to reflect the actual movement of the user while performing the video call.

Meanwhile, the above-described embodiment describes that the electronic device 100 may calculate the horizontal correction angle and the vertical correction angle based on the first user video, the rotational angle of the camera 122, the projection angle of the projection unit 112, and the sensing value obtained through the sensor unit 121, and obtain the frontal video of the user based on the first user video, the horizontal correction angle, and the vertical correction angle. However, this is only an embodiment, and the electronic device 100 may pre-register the frontal video of the user or output a message guiding the user to look at the camera 122 of the electronic device 100 before starting the video call (or before accepting the video call) and then capture the frontal video of the user to provide the frontal video of the user.

In addition, the electronic device 100 may identify whether the electronic device 100 is located in the space where the video call is possible based on at least one of the first user video, the rotational angle of the camera, the projection angle of the projection unit, and the sensing value obtained through the sensor. In addition, the electronic device 100 may control the driving unit to move to the space where the video call is possible based on the electronic device 100 being not located in the space where the video call is possible.

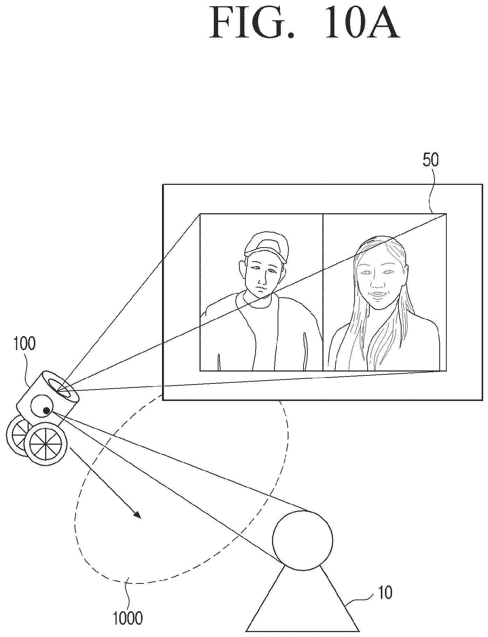

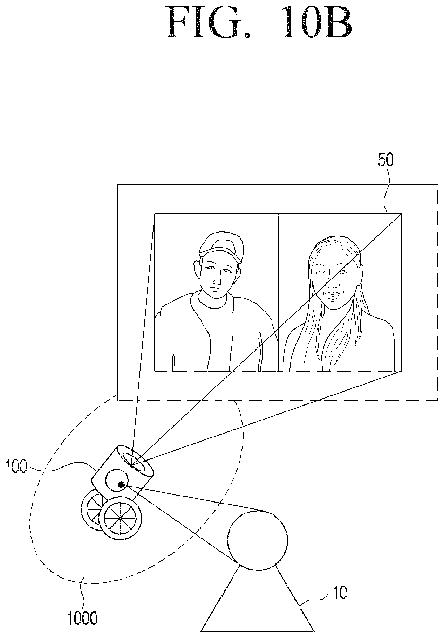

FIGS. 10A and 10B are diagrams for describing a method for moving an electronic device by identifying whether it is located in a space where the video call is possible according to an embodiment of the present disclosure.

Specifically, based on the electronic device 100 performing the video call function, the electronic device 100 may identify whether the electronic device 100 is located in the space where the video call is possible based on at least one of the first user video obtained at the current location, the rotational angle of the camera, the projection angle of the projection unit, and the sensing value obtained through the sensor. More specifically, the electronic device 100 may determine whether the first user video may be corrected to the frontal video based on at least one of the first user video, the rotational angle of the camera, the projection angle of the projection unit, and the sensing value obtained through the sensor, and may determine whether the current first area is the space where the video call is possible. In particular, based on the user face included in the first user video being less than or equal to a critical ratio (e.g., 40%) compared to the entire user face, or the rotational angle of the camera or the projection angle of the projection unit is out of a critical range, or the distance between the electronic device 100 and the projection surface 50 obtained through the sensor or the distance between the electronic device 100 and the user 10 is greater than or equal to a critical value, the electronic device 100 may determine that the current electronic device 100 is not located in the space where the video call is possible.

In addition, based on the electronic device 100 being not located in the space where the video call is possible, the electronic device 100 may control the driving unit 120 to move to the space where the video call is possible. In this case, the electronic device 100 may move to the space where the video call is possible based on at least one of the first user video, the rotational angle of the camera, the projection angle of the projection unit, and the sensing value obtained through the sensor. For example, based on the face of the user included in the first user video being in the left rear area, the electronic device 100 may control the driving unit 120 to move to the right front. In addition, the electronic device 100 may control the driving unit 120 so that the rotational angle of the camera or the projection angle is located within a critical range. In addition, the electronic device 100 may control the driving unit 120 so that the projection surface 50 and the user are located within a critical distance from the electronic device 100.

For example, as illustrated in FIG. 10a, based on it being determined that the electronic device 100 is out of the space 1000 where the video call is possible, the electronic device 100 may determine the space 1000 where the video call is possible based on at least one of the first user video, the rotational angle of the camera, the projection angle of the projection unit, and the sensing value obtained through the sensor. As illustrated in FIG. 10b, the electronic device 100 may control the driving unit 120 so that the electronic device 100 is located in the space 1000 where the video call is possible.

Meanwhile, in the above-described embodiment, it was described that one user is included in the first user video captured by the camera 122, but this is only an embodiment, and multiple users may be included in the first user video.

In particular, based on multiple users being included in the user video, the electronic device 100 may identify a speaker speaking among the multiple users. Then, the electronic device 100 may calculate the horizontal correction angle and the vertical correction angle based on the identified speaker. Specifically, the electronic device 100 may identify a speaker based on the lip movement among the faces of the multiple users included in the first video. Then, the electronic device 100 may rotate the camera 122 so that the identified speaker is located in the central area of the video. The electronic device 100 may obtain the first user video based on the speaker, and calculate the first distance $a_1$, the second distance $a_2$, the rotational angle of the camera 122, the projection angle of the projection unit 112, and the first to third heights $h_1$ to $h_3$ based on the speaker to calculate the horizontal correction angle and the vertical correction angle.

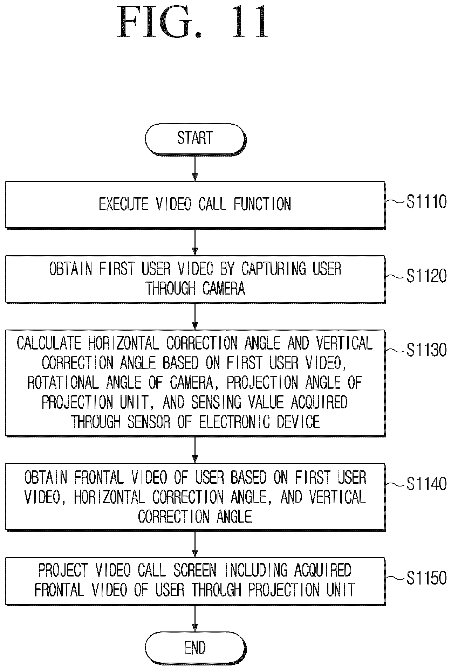

FIG. 11 is a flowchart for describing a control method for an electronic device for providing a video call function according to an embodiment of the present disclosure.

First, the electronic device 100 executes the video call function (S1110).

The electronic device 100 captures a user through the camera 122 to obtain the first user video (S1120). In this case, the first user video may be a video captured from the side surface of the user 10 based on the user 10 looking at the projection surface (particularly, the opponent) 50.

The electronic device 100 calculates the horizontal correction angle and the vertical correction angle based on the first user video, the rotational angle of the camera 122, the projection angle of the projection unit 112, and the sensing value obtained through the sensor of the electronic device 100 (S1130).

Specifically, the electronic device 100 may obtain the information about the first distance between the electronic device 100 and the center of the projection surface based on the first sensing value obtained through at least one distance sensor. In addition, the electronic device 100 may obtain the information about the second distance between the electronic device 100 and the face of the user based on the second sensing value obtained through at least one distance sensor. The electronic device 100 may calculate the horizontal correction angle based on the information about the first distance, the information about the second distance, and the first rotational angle of the camera 122.

In addition, the electronic device 100 may obtain the information about the first height from the floor to the center of the projection surface based on the projection angle of the projection unit 112 and the second sensing value obtained through at least one distance sensor. The electronic device 100 may obtain the information about the second height from the floor to the face of the user based on a second rotational angle of the camera 122 and the second sensing value obtained through at least one sensor. The electronic device 100 may obtain the information about the third distance between the face of the user and the center of the projection surface based on the information about the first distance, the information about the second distance, and the second rotational angle of the camera 122. The electronic device 100 may calculate the vertical correction angle based on the information about the first height, the information about the second height, and the information about the third distance.

The electronic device 100 obtains the frontal video of the user based on the first user video, the horizontal correction angle, and the vertical correction angle (S1140). **In** detail, the electronic device 100 may rotate the first user video in the first direction based on the horizontal correction angle, and rotate the first user video in the second direction based on the vertical correction angle, thereby obtaining the frontal video of the user. Alternatively, the electronic device 100 may obtain the frontal video of the user by inputting the first user video, the horizontal correction angle, and the vertical correction angle to the learned neural network model.

The electronic device 100 projects the video call screen including the obtained frontal video of the user through the projection unit 112 (S1150). In this case, the electronic device 100 may generate the avatar video based on the frontal video of the user, and may project the video call screen including the generated avatar video.

In addition, the electronic device 100 may obtain the second user video using the camera 122 while performing the video call. The electronic device 100 may calculate the rotational angle of the face of the user based on the second user video. The electronic device 100 may rotate the frontal video of the user based on the calculated rotational angle of the face of the user.

In addition, the electronic device 100 may identify whether the electronic device 100 is located in the space where the video call is possible based on at least one of the first user video, the rotational angle of the camera, the projection angle of the projection unit 112, and the sensing value obtained through the sensor unit 121. In addition, based on the electronic device 100 being not located in the space where the video call is possible, the electronic device 100 may control the driving unit 120 to move to the space where the video call is possible.

In addition, based on multiple users being included in the first user video, the electronic device 100 may identify a speaker among the multiple users. The electronic device 100 may calculate the horizontal correction angle and the vertical correction angle based on the identified speaker.

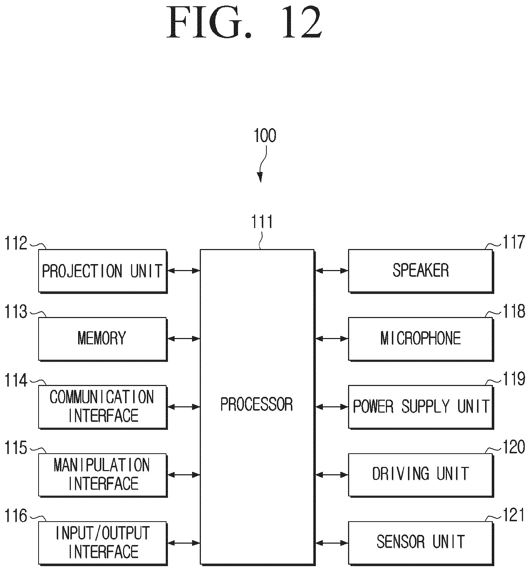

FIG. 12 is a block diagram illustrating in detail the configuration of the electronic device according to an embodiment of the present disclosure. Referring to FIG. 12, the electronic device 100 may include at least one of the processor 111, the projection unit 112, the memory 113, a communication interface 114, a manipulation interface 115, an input/output interface 116, a speaker 117, a microphone 118, a power supply unit 119, the driving unit 120, or the sensor unit 121. Meanwhile, the components illustrated in FIG. 12 are merely an example of various embodiments, and some components may be omitted and new components may be added. Meanwhile, the content already described in FIG. 2 is omitted.

The processor 111 may be implemented as a digital signal processor (DSP), a microprocessor, or a time controller (TCON) processing a digital signal. However, the processor 120 is not limited thereto, and may include one or more of a central processing unit (CPU), a micro controller unit (MCU), a micro processing unit (MPU), a controller, an application processor (AP), a graphics processing unit (GPU) or a communication processor (CP), or an advanced reduced instruction set computer (RISC) machines (ARM) processor, or may be defined by these terms. In addition, the processor 111 may be implemented by a system-on-chip (SoC) or a large scale integration (LSI) in which a processing algorithm is embedded, or may be implemented in a field programmable gate array (FPGA) form. In addition, the processor 111 may perform various functions by executing computer executable instructions stored in the memory 113.

The projection unit 112 may be a component that projects the image to the outside. The projection unit 112 according to various embodiments of the disclosure may be implemented in various projection types (e.g., cathode-ray tube (CRT) type, liquid crystal display (LCD) type, digital light processing (DLP) type, or laser type). As various examples, the CRT type has basically the same principle as the principle of a CRT monitor. The CRT type may display the image on the screen by enlarging the image by using a lens in front of a cathode-ray tube (CRT). The CRT type may be divided into a one-tube type and a three-tube type based on the number of cathode-ray tubes, and in the three-tube type, the cathode-ray tubes of red, green, and blue are separated from one another.

For various examples, the LCD type may display the image by allowing light emitted from a light source to pass through a liquid crystal. The LCD type may be divided into a single-panel type and a three-panel type. Based on the three-plate type, the light emitted from the light source may being separated into red, green and blue in a dichroic mirror (which is a mirror that reflects only light of a specific color and allows the rest to pass therethrough), may then pass through the liquid crystal, and may then be collected into one place again.

For still various examples, the DLP type may display the image by using a digital micromirror device (DMD) chip. The DLP type projection unit may include a light source, a color wheel, the DMD chip, a projection lens, etc. Light emitted from the light source may be colored as passing through a rotating color wheel. Light passed through the color wheel may be input into the DMD chip. The DMD chip may include numerous micromirrors and reflect light input to the DMD chip. The projection lens may expend light reflected from the DMD chip to the image size.

For yet various examples, the laser type may include a diode pumped solid state (DPSS) laser and a galvanometer. The laser type that outputs various colors may use a laser in which three DPSS lasers are respectively installed for red, green, and blue (RGB) colors, and their optical axes overlap each other by using a special mirror. The galvanometer may include a mirror and a high-power motor, and move the mirror at a high speed. For example, the galvanometer may rotate the mirror at up to 40 KHz/sec. The galvanometer may be mounted in a scanning direction, and in general, a projector performs planar scanning, and the galvanometer may thus also be disposed by being divided into x and y axes.

Meanwhile, the projection unit 112 may include light sources of various types. For example, the projection unit 112 may include at least one light source of a lamp, a light emitting diode (LED), and a laser.

The projection unit 112 may output the image in a screen ratio of 4:3, a screen ratio of 5:4, and a wide screen ratio of 16:9, based on a purpose of the electronic apparatus 100, the user's setting or the like, and may output the image having various resolutions such as wide video graphics array WVGA (854*480 pixels), super video graphics array SVGA (800*600 pixels), extended graphics array XGA(1024*768 pixels), wide extended graphics array WXGA (1280*720 pixels), WXGA (1280*800 pixels), super extended graphics array SXGA (1280*1024 pixels), ultra extended graphics array UXGA (1600*1200 pixels) and full high-definition HD (1920*1080 pixels), based on the screen ratio.

The projection unit 112 may perform various functions for adjusting the output image under the control of the processor 111. For example, the projection unit 112 may perform a zoom function, the keystone function, a quick corner (or four corner) keystone function and a lens shift function, or the like.

Meanwhile, the projection unit 112 may enlarge or reduce the image based on its distance (i.e., projection distance) to the screen. That is, the projection unit 112 may perform the zoom function based on its distance to the screen. The zoom function may include a hardware method of adjusting a screen size by moving a lens, and a software method of adjusting the screen size by cropping the image, or the like. Meanwhile, in case that the zoom function is performed, it is necessary to adjust a focus of the image. For example, a method of adjusting the focus may include a manual focusing method, an electric focusing method, etc. The manual focusing method may indicate a method of manually adjusting the focus, and the electric focusing method may indicate a method in which the projector automatically adjusts the focus by using a motor built therein based on performing the zoom function. Based on performing the zoom function, the projection unit 112 may provide a digital zoom function through software, and may provide an optical zoom function in which the zoom function is performed by moving the lens by using a driving unit 120.

In addition, the projection unit 112 may perform the keystone correction function. based on a height not matching a front projection, the screen may be distorted up or down. The keystone correction function may be a function of correcting a distorted screen. For example, in case that the distortion occurs on the screen in a horizontal direction, the distortion may be corrected using a horizontal keystone, and in case that the distortion occurs on the screen in a vertical direction, the distortion may be corrected using a vertical keystone. The quick corner (or four corner) keystone correction function may be a function of correcting the screen in case that a balance between corner areas of the screen is not appropriate while a central area of the screen is normal. The lens shift function may be a function of moving the screen as it is in case that the screen is outside a screen area.

Meanwhile, the projection unit 112 may provide the zoom/keystone/focusing functions by automatically analyzing a surrounding environment and a projection environment without the user input. In addition, the projection unit 112 may automatically provide the zoom/keystone/focusing functions, based on the distance between the electronic apparatus 100 and the screen, information about a space where the electronic apparatus 100 is currently located, information about an amount of ambient light, or the like, detected by the sensor (e.g., depth camera, distance sensor, infrared sensor, or illumination sensor).

In addition, the projection unit 112 may provide an illumination function by using the light source. In particular, the projection unit 112 may provide the illumination function by outputting the light source by using the LED. In various embodiments, the projection unit 112 may include one LED, and in another embodiment, the electronic apparatus 100 may include the plurality of LEDs. Meanwhile, the projection unit 112 may output the light source by using a surface-emitting LED in an implementation example. Here, the surface-emitting LED may be an LED in which an optical sheet is disposed on an upper side of the LED for the light source to be evenly dispersed and output. In addition, based on being output through the LED, the light source may be evenly dispersed through the optical sheet, and the light source dispersed through the optical sheet may be introduced into a display panel.

Meanwhile, the projection unit 112 may provide the user with a dimming function for adjusting intensity of the light source. In addition, the projection unit 112 may control the LED to output the intensity of the light source that corresponds to a received user input based on receiving the user input for adjusting the intensity of the light source from the user through the manipulation interface 115 (e.g., touch display button or dial).

In addition, the projection unit 112 may provide the dimming function, based on the content analyzed by the processor 111 without the user input. In addition, the projection unit 112 may control the LED to output the intensity of the light source, based on information (e.g., content type or content brightness) on the currently-provided content.

Meanwhile, the projection unit 112 may control a color temperature by the control of the processor 111. Here, the processor 111 may control a color temperature based on the content. In case that it is identified that the content is to be output, the processor 111 may obtain color information for each frame of the content whose output is determined. In addition, the processor 111 may then control the color temperature based on the obtained color information for each frame. The processor 111 may obtain at least one main color of the frame based on the color information for each frame. The processor 111 may then adjust the color temperature based on the obtained at least one main color. For example, the color temperature that the processor 111 may adjust may be divided into a warm type or a cold type. The frame to be output (hereinafter, output frame) may include a fire scene. The processor 111 may identify (or obtain) that the main color is red based on the color information included in the current output frame. The processor 111 may then identify the color temperature corresponding to the identified main color (red). The color temperature corresponding to the red color may be the warm type. Meanwhile, the processor 111 may use an artificial intelligence model to obtain the color information or main color of the frame. In various examples, the artificial intelligence model may be stored in the electronic apparatus 100 (e.g., memory 113). In another example, the artificial intelligence model may be stored in an external server which may communicate with the electronic apparatus 100.

The memory 113 may be implemented as an internal memory such as a read-only memory (ROM) (e.g., an electrically erasable programmable read-only memory (EEPROM)), a random access memory (RAM), or the like, included in the processor 111 or be implemented as a memory separate from the processor 111. In this case, the memory 113 may be implemented in a form of a memory embedded in the electronic device 100 or a form of a memory attachable to and detachable from the electronic device 100, depending on a data storing purpose. For example, data for driving the electronic device 100 may be stored in the memory embedded in the electronic device 100, and data for an extension function of the electronic device 100 may be stored in the memory attachable to and detachable from the electronic device 100.

Meanwhile, the memory embedded in the electronic device 100 may be implemented by at least one of a volatile memory (for example, a dynamic RAM (DRAM), a static RAM (SRAM), a synchronous dynamic RAM (SDRAM), or the like) or a non-volatile memory (for example, a one time programmable ROM (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, or a solid state drive (SSD)), and the memory attachable to and detachable from the electronic device 100 may be implemented in a form such as a memory card (for example, a compact flash (CF), a secure digital (SD), a micro-SD, a mini-SD, an extreme digital (xD), a multi-media card (MMC), or the like), an external memory (for example, a universal serial bus (USB) memory) connectable to a USB port, or the like.

The memory 113 may store at least one instruction on the electronic apparatus 100. In addition, the memory 113 may store an operating system (O/S) for driving the electronic apparatus 100. The memory 113 may also store various software programs or applications for operating the electronic apparatus 100 in various examples of the disclosure. Further, the memory 113 may include a semiconductor memory such as a flash memory, or a magnetic storing medium such as a hard disk.

In addition, the memory 113 may store various software modules for operating the electronic apparatus 100 in the various examples of the disclosure, and the processor 111 may control the operation of the electronic apparatus 100 by executing the various software modules stored in the memory 113. That is, the memory 113 may be accessed by the processor 111, and the processor 111 may perform readout, recording, correction, deletion, update and the like of data in the memory 113.

Meanwhile, in the disclosure, the term "memory 113" may include a storage, a read only memory (ROM) or a random access memory (RAM) in the processor 111, or a memory card (for example, a micro secure digital (SD) card or a memory stick) mounted in the electronic apparatus 100.

The communication interface 114 is a component performing communication with various types of external apparatuses according to various types of communication manners. The communication interface 114 may include a wireless communication module or a wired communication module. Here, each communication module may be implemented in the form of at least one hardware chip.

The wireless communication module may be a module that communicates wirelessly with an external device. For example, the wireless communication module may include at least one of a Wi-Fi module, a Bluetooth module, an infrared communication module, or other communication modules.

The Wi-Fi module and the Bluetooth module perform communication in a Wi-Fi method and a Bluetooth method, respectively. based on the Wi-Fi module or the Bluetooth module being used, various connection information such as a service set identifier (SSID), a session key, and the like, is first transmitted and received, communication is connected using the connection information, and various information may then be transmitted and received.

The infrared communication module performs communication according to an infrared data association (IrDA) technology of wirelessly transmitting data to a short distance using an infrared ray located between a visible ray and a millimeter wave.

Other wireless communication modules may include at least one communication chip performing communication according to various wireless communication standards such as zigbee, 3rd generation (3G), 3rd generation partnership project (3GPP), long term evolution (LTE), LTE advanced (LTE-A), 4th generation (4G), 5th generation (5G), and the like, in addition to the communication manner described above.

The wired communication module may be a module that communicates with an external device in a wired manner. For example, the wired communication module may include at least one of a local area network (LAN) module, an Ethernet module, a pair cable, a coaxial cable, an optical fiber cable, or an ultra wide-band (UWB) module.

The manipulation interface 115 may include various types of input devices. For example, the manipulation interface 115 may include a physical button. The physical button may include a function key, a direction key (e.g., a four-direction key), or a dial button. In various examples, the physical button may be implemented as a plurality of keys. In another example, the physical button may be implemented as one key. In case that the physical button is implemented as one key, the electronic apparatus 100 may receive the user input in which the one key is pressed for a critical time or longer. Based on receiving the user input in which one key is pressed for the critical time or longer, the processor 111 may perform a function corresponding to the user input. For example, the processor 111 may provide the illumination function based on the user input.

In addition, the manipulation interface 115 may receive the user input by using a non-contact method. In the case of receiving the user input by using a contact method, a physical force may be required to be transmitted to the electronic apparatus 100. There may thus be a need for a method of controlling the electronic apparatus 100 regardless of the physical force. The manipulation interface 115 may receive a user gesture and may perform an operation corresponding to the received user gesture. Here, the manipulation interface 115 may receive the user gesture through the sensor (e.g., image sensor or infrared sensor).

In addition, the manipulation interface 115 may receive the user input by using a touch method. For example, the manipulation interface 115 may receive the user input through a touch sensor. In various examples, the touch method may be implemented as the non-contact method. For example, the touch sensor may determine whether a user body approaches within a critical distance. Here, the touch sensor may identify the user input even in case that the user does not touch the touch sensor. Meanwhile, in various examples, the touch sensor may identify the user input in which the user touches the touch sensor.

Meanwhile, the electronic apparatus 100 may receive the user input in various ways other than the manipulation interface 115 described above. In various examples, the electronic apparatus 100 may receive the user input from an external remote control device. Here, the external remote control device may be a remote control device corresponding to the electronic apparatus 100 (e.g., control device dedicated to the electronic apparatus 100) or the portable communication device (e.g., smartphone or wearable device) of the user. Here, the portable communication device of the user may store an application for controlling the electronic apparatus 100. The portable communication device may obtain the user input from the application stored therein, and transmit the obtained user input to the electronic apparatus 100. The electronic apparatus 100 may receive the user input from the portable communication device, and perform an operation corresponding to the user's control command.

Meanwhile, the electronic apparatus 100 may receive the user input by using voice recognition. In various examples, the electronic apparatus 100 may receive a user voice through the microphone included in the electronic apparatus 100. In various examples, the electronic apparatus 100 may receive the user voice from the microphone or the external device. In addition, the external device may obtain the user voice through the microphone of the external device, and transmit the obtained user voice to the electronic apparatus 100. The user voice transmitted from the external device may be audio data or digital data converted from the audio data (e.g., audio data converted to a frequency domain). Here, the electronic apparatus 100 may perform an operation corresponding to the received user voice. In addition, the electronic apparatus 100 may receive the audio data corresponding to the user voice through the microphone. The electronic apparatus 100 may then convert the received audio data to the digital data. The electronic apparatus 100 may then convert the converted digital data to text data by using a speech-to-text (STT) function. In various examples, the speech-to-text (STT) function may be directly performed by the electronic apparatus 100.

In another example, the speech-to-text (STT) function may be performed by the external server. The second electronic apparatus 120 may transmit the digital data to the external server. The external server may convert the digital data to the text data, and obtain control command data based on the converted text data. The external server may transmit the control command data (which may here also include the text data) to the electronic apparatus 100. The electronic apparatus 100 may perform an operation corresponding to the user voice based on the obtained control command data.

Meanwhile, the electronic apparatus 100 may provide a voice recognition function by using one assistance (or an artificial intelligence agent such as Bixby TM), which is only various examples, and the electronic apparatus 100 may provide the voice recognition function by using a plurality of assistances. The electronic apparatus 100 may provide the voice recognition function by selecting one of the plurality of assistances based on a trigger word corresponding to the assistance or a specific key included in a remote controller.

Meanwhile, the electronic apparatus 100 may receive the user input by using a screen interaction. The screen interaction may indicate a function in which the electronic apparatus 100 identifies whether a predetermined event is generated through the image projected to the screen (or projection plane), and obtains the user input based on the predetermined event. Here, the predetermined event may be an event in which a predetermined object is identified at a specific position (e.g., position to which the UI for receiving the user input is projected). Here, the predetermined object may include at least one of a user body part (e.g., finger), a pointer, or a laser point. The electronic apparatus 100 may identify that the electronic apparatus 100 receives the user input for selecting the projected UI in case that it is identified that the predetermined object exists at the position corresponding to the projected UI. For example, the electronic apparatus 100 may project a guide image displaying the UI on the screen. The electronic apparatus 100 may then identify whether the user selects the projected UI. The electronic apparatus 100 may identify that the user selects the projected UI in case that the predetermined event is identified at the position of the projected UI. The projected UI may include at least one item. The electronic apparatus 100 may perform spatial analysis to identify whether the predetermined event exists at the position of the projected UI. The electronic apparatus 100 may perform the spatial analysis through the sensor (e.g., image sensor, infrared sensor, depth camera, or distance sensor). The electronic apparatus 100 may identify whether the predetermined event is generated at the specific position (i.e., position to which the UI is projected) by performing the spatial analysis. In addition, in case that it is identified that the predetermined event is generated at the specific position (i.e., position to which the UI is projected), the electronic apparatus 100 may identify that the electronic apparatus 100 receives the user input for selecting the UI corresponding to the specific position.

The input/output interface 116 is a component for inputting or outputting at least one of an audio signal or an image signal. The input/output interface 116 may receive at least one of the audio signal or the image signal from the external device, and output the control command to the external device.

According to an implementation example, the input/output interface 116 may be implemented as an interface inputting/outputting only an audio signal and an interface inputting/outputting only an image signal, or may be implemented as one interface inputting/outputting both of the audio signal and image signal.

Meanwhile, The input/output interface 116 according to various embodiments of the disclosure may be implemented as a wired input/output interface of at least one of a high definition multimedia interface (HDMI), a mobile high-definition link (MHL), a universal serial bus (USB), a USB C-type, a display port (DP), a thunderbolt, a video graphics array (VGA) port, a red-green-blue (RGB) port, a D-subminiature (D-SUB) or a digital visual interface (DVI). In various examples, the wired input/output interface may be implemented as an interface inputting or outputting only the audio signal and an interface inputting or outputting only the image signal, or implemented as one interface inputting or outputting both the audio signal and the image signal.

In addition, the electronic apparatus 100 may receive the data through the wired input/output interface, which is only various examples, and the electronic apparatus 100 may receive power through the wired input/output interface. For example, the electronic apparatus 100 may receive power from an external battery through the USB C-type, or receive power from an outlet through a power adapter. For various examples, the electronic apparatus may receive power from the external device (e.g., laptop computer or monitor) through the display port (DP).

Meanwhile, the audio signal may be implemented to be received through a wired input/output interface, and the image signal may be implemented to be received through a wireless input/output interface (or a communication interface). Alternatively, the audio signal may be implemented to be received through a wireless input/output interface (or a communication interface), and the image signal may be implemented to be received through a wired input/output interface.

The speaker 117 is a component that outputs the audio signal. In particular, the speaker 117 may include an audio output mixer, an audio signal processor, and an audio output module. The audio output mixer may mix the plurality of audio signals to be output as at least one audio signal. For example, the audio output mixer may mix an analog audio signal and another analog audio signal (e.g., analog audio signal received from the outside) as at least one analog audio signal. The audio output module may include the speaker or an output terminal. According to various embodiments, the audio output module may include the plurality of speakers. In this case, the audio output module may be disposed in the main body, and audio emitted while covering at least a portion of a diaphragm of the audio output module may pass through a waveguide to be transmitted to the outside the main body. The audio output module may include a plurality of audio output units, and the plurality of audio output units may be symmetrically arranged on the exterior of the main body, and accordingly, the audio may be emitted to all directions, i.e., all directions in 360°.

The microphone 118 is a component for receiving a user's voice or other sounds and converting the user's voice or other sounds into audio data. The microphone 118 may receive the user voice in an activated state. For example, the microphone 118 may be formed integrally with the electronic device 100 in upper, front, side directions, or the like. The microphone 118 may include various components such as a microphone collecting a user voice having an analog form, an amplifying circuit amplifying the collected user voice, an A/D converting circuit sampling the amplified user voice to convert the amplified user voice into a digital signal, a filter circuit removing a noise component from the converted digital signal, and the like.

The power supply 119 may receive power from the outside and supply power to the various components of the electronic apparatus 100. The power supply 119 according to various embodiments of the disclosure may receive power in various ways. In various examples, the power supply 119 may receive power by using the connector 130 as illustrated in FIG. 12. In addition, the electronic apparatus may receive power by using a direct current (DC) power cord of 220V. However, the disclosure is not limited thereto, and the power supply 119 may receive power by using a USB power cord, or may receive power by using a wireless charging method.

In addition, the power supply 119 may receive power by using an internal battery or the external battery. The power supply 119 according to various embodiments of the disclosure may receive power through the internal battery. For example, the power supply 119 may charge power of the internal battery by using at least one of the DC power cord of 220V, the USB power cord, or a USB C-Type power cord, and may receive power through the charged internal battery. In addition, the power supply 119 according to various embodiments of the disclosure may receive power through the external battery. For example, the power supply 119 may receive power through the external battery in case that the electronic apparatus and the external battery is connected through various wired communication methods such as the USB power code, the USB C-type power code, or a socket groove. That is, the power supply 119 may directly receive power from the external battery, or charge the internal battery through the external battery and receive power from the charged internal battery.

The power supply 119 according to the disclosure may receive power by using at least one of the aforementioned plurality of power supply methods.

Meanwhile, with respect to power consumption, the electronic apparatus 100 may have the power consumption of a predetermined value (e.g., 43W) or less due to a socket type, another standard, etc. The electronic apparatus 100 may change power consumption to reduce the power consumption based on using the battery. That is, the electronic apparatus 100 may change the power consumption based on the power supply method, power usage amount, or the like.

The driving unit 120 may drive at least one hardware component included in the electronic device 100. The driving unit 120 may generate a physical force and transmit the generated physical force to at least one hardware component included in the electronic device 100.

Here, the driving unit 120 may generate driving power for the movement (e.g., movement of the electronic device 100) of the hardware component included in the electronic device 100 or the rotation (e.g., rotation of the projection lens) of the component.

The driving unit 120 may adjust the projection direction (or projection angle) of the projection unit 122. In addition, the driving unit 120 may move the position of the electronic device 100. Here, the driving unit 120 may control a moving member 109 to move the electronic device 100. For example, the driving unit 120 may control the moving member 109 using the motor.

The sensor part 121 may include at least one sensor. Specifically, the sensor unit 121 may include at least one of a tilt sensor for sensing a tilt of the electronic device 100 and an image sensor for capturing an image. Here, the tilt sensor may be an acceleration sensor or a gyro sensor, and the image sensor may mean a camera or a depth camera. Meanwhile, the tilt sensor may be described as a motion sensor. In addition, the sensor unit 121 may include various sensors other than the tilt sensor or the image sensor. For example, the sensor unit 121 may include an illuminance sensor and a distance sensor. The distance sensor may be a time of flight (ToF). In addition, the sensor unit 121 may include a lidar sensor.

Meanwhile, the electronic device 100 may control an illumination function by linking with an external device. Specifically, the electronic device 100 may receive illumination information from the external device. Here, the illumination information may include at least one of brightness information or color temperature information set in the external device. Here, the external device may mean a device (e.g., an IoT device included in the same home/work network) connected to the same network as the electronic device 100 or a device (e.g., a remote control server) that is not in the same network as the electronic device 100 but can communicate with the electronic device 100. For example, it is assumed that an external illumination device (IoT device) included in the same network as the electronic device 100 is outputting red light at a brightness of 50. The external illumination device (IoT device) may directly or indirectly transmit the illumination information (e.g., information indicating that it is outputting red light at a brightness of 50) to the electronic device 100. Here, the electronic device 100 may control the output of the light source based on the illumination information received from the external lighting device. For example, based on the illumination information received from the external illumination device including the information indicating that red light is output at the brightness of 50, the electronic device 100 may output the red light at the brightness of 50.

Meanwhile, the electronic device 100 may control the illumination function based on the biometric information. Specifically, the processor 111 may obtain the biometric information of the user. Here, the biometric information may include at least one of body temperature, heart rate, blood pressure, respiration, and electrocardiogram of a user. Here, the biometric information may include various types of information in addition to the information described above. As an example, the electronic device 100 may include the sensor for measuring the biometric information. The processor 111 may obtain the biometric information of the user through the sensor, and control the output of the light source based on the obtained biometric information. As another example, the processor 111 may receive the biometric information from the external device through the input/output interface 116. Here, the external device may mean portable communication devices (for example, a smartphone or a wearable device) of the user. The processor 111 may obtain the biometric information of the user from the external device, and control the output of the light source based on the obtained biometric information. Meanwhile, according to the implementation example, the electronic device 100 may identify whether the user is sleeping, and based on it being determined that the user is sleeping (or preparing to sleep), the processor 111 may control the output of the light source based on the biometric information of the user.

Meanwhile, the electronic apparatus 100 according to various embodiments of the disclosure may provide various smart functions.

In addition, the electronic apparatus 100 may be connected to a portable terminal device controlling the electronic apparatus 100, and the screen output from the electronic apparatus 100 may be controlled by the user input which is input from the portable terminal device. For example, the portable terminal device may be implemented as a smartphone including a touch display, the electronic apparatus 100 may receive screen data provided by the portable terminal device from the portable terminal device and output the data, and the screen output by the electronic apparatus 100 may be controlled based on the user input that is input from the portable terminal device.

The electronic apparatus 100 may be connected to the portable terminal device by using various communication methods such as miracast, airplay, wireless dalvik executable (DEX) and a remote personal computer (PC) method, and may share a content or music, provided by the portable terminal device.

In addition, the portable terminal device and the electronic apparatus 100 may be connected to each other by various connection methods. In various examples, the portable terminal device may search for the electronic apparatus 100 and perform wireless connection therebetween, or the electronic apparatus 100 may search for the portable terminal device and perform the wireless connection therebetween. The electronic apparatus 100 may then output the content provided from the portable terminal device.

In various examples, the electronic apparatus 100 may output the content or music being output from the portable terminal device in case that the portable terminal device is located around the electronic apparatus 100 and the predetermined gesture (e.g., motion tap view) is then detected through the display of the portable terminal device, while the specific content or music is being output from the portable terminal device.

In various examples, the electronic apparatus 100 may output the content or music being output from the portable terminal device in case that it is detected that the portable terminal device is located around the electronic apparatus 100 by a predetermined distance or less (e.g., non-contact tap view), or the portable terminal device touches the electronic apparatus 100 twice at short intervals (e.g., contact tap view) in the state where the specific content or music is being output from the portable terminal device.

In the above example, the screen provided by the portable terminal device is the same as the screen provided by the electronic apparatus 100. However, the disclosure is not limited thereto. That is, in case that the portable terminal device and the electronic apparatus 100 are connected to each other, the portable terminal device may output a first screen provided by the portable terminal device, and the electronic apparatus 100 may output a second screen provided by the portable terminal device, which is different from the first screen. For example, the first screen may be a screen provided by a first application installed in the portable terminal device, and the second screen may be a screen provided by a second application installed in the portable terminal device. For example, the first screen and the second screen may be the screens different from each other that are provided by one application installed in the portable terminal device.

In addition, for example, the first screen may be a screen including the UI in a remote controller form for controlling the second screen.

The electronic apparatus 100 according to the disclosure may output a standby screen. For example, the electronic apparatus 100 may output the standby screen in case that the electronic apparatus 100 and the external device are not connected to each other or in case that there is no input received from the external device for the predetermined time. A condition for the electronic apparatus 100 to output the standby screen is not limited to the above-described example, and the standby screen may be output based on various conditions.

The electronic apparatus 100 may output the standby screen in the form of a blue screen, and the disclosure is not limited thereto. For example, the electronic apparatus 100 may obtain an atypical object by extracting only the shape of a specific object from the data received from the external device, and output the standby screen including the obtained atypical object.

Meanwhile, the electronic device 100 may further include a display (not illustrated).

The display (not illustrated) may be implemented as various types of displays such as a liquid crystal display (LCD), an organic light emitting diode (OLED) display, a plasma display panel (PDP), and the like. A driving circuit, a backlight unit, and the like, that may be implemented in the form such as an amorphous silicon thin film transistor (a-si TFT), a low temperature poly silicon (LTPS) TFT, an organic TFT (OTFT), and the like, may be included in the display (not illustrated). Meanwhile, the display (not illustrated) may be implemented as a touch screen combined with a touch sensor, a flexible display, a three-dimensional (3D) display, or the like. In addition, the display (not illustrated) according to various embodiments of the present disclosure may include not only a display panel outputting an image, but also a bezel housing the display panel. In particular, the bezel according to various embodiments of the present disclosure may include a touch sensor (not illustrated) for sensing a user interaction.

Meanwhile, the electronic device 100 may further include a shutter unit (not illustrated).

The shutter unit (not illustrated) may include at least one of a shutter, a fixing member, a rail, or a body.

Here, the shutter may block light output from the projection unit 112. Here, the fixing member may fix the position of the shutter. Here, the rail may be a path for moving the shutter and the fixing member. Here, the body may be a component including the shutter and the fixing member.

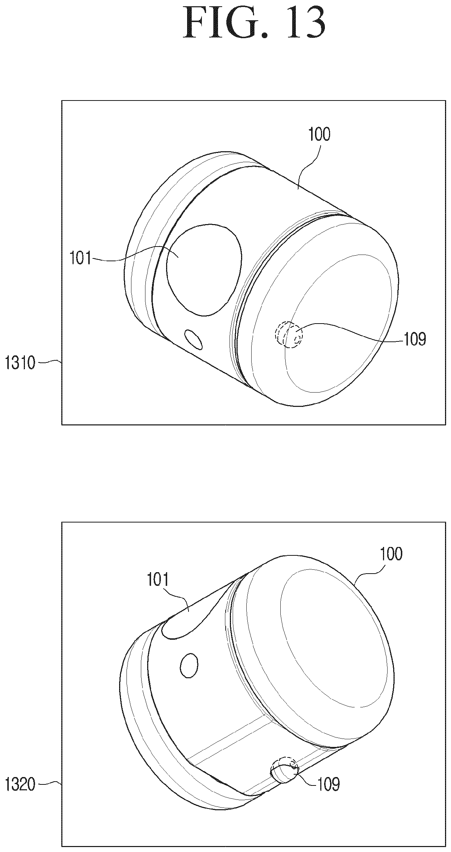

FIG. 13 is a perspective view illustrating an appearance of the electronic device according to an embodiment of the present disclosure. Referring to an embodiment 1310 of FIG. 13, the electronic device 100 may include the moving member 109. The moving member 109 may mean a member for moving from a first position to a second position in a space where the electronic device 100 is arranged. The electronic device 100 may control the moving member 109 to move the electronic device 100 by using the force generated from the driving unit 120. In this case, the moving member 109 may include a motor or a wheel.

An embodiment 1320 of FIG. 13 is a drawing of the electronic device 100 of the embodiment 1310 viewed from a different direction.

Meanwhile, the methods according to various embodiments of the present disclosure may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play Store™) or may be directly distributed (for example, download or upload) between two user devices (for example, smart phones) online. In a case of the online distribution, at least some of the computer program products (for example, downloadable app) may be at least temporarily stored in a machine-readable storage medium such as a memory of a server of a manufacturer, a server of an application store, or a relay server or be temporarily created.

The methods according to various embodiments of the present disclosure may be implemented by software including instructions stored in a machine-readable storage medium (for example, a computer-readable storage medium). A machine is a device capable of calling a stored instruction from a storage medium and operating according to the called instruction, and may include the electronic device (e.g., TV) of the disclosed embodiments.

Meanwhile, the machine-readable storage medium may be provided in a form of a non-transitory storage medium. Here, the "non-transitory storage medium" means that the storage medium is a tangible device, and does not include a signal (for example, electromagnetic waves), and the term does not distinguish between the case where data is stored semi-permanently on a storage medium and the case where data is temporarily stored thereon. For example, the "non-transitory storage medium" may include a buffer in which data is temporarily stored.

In a case where a command is executed by the processor, the processor may directly perform a function corresponding to the command or other components may perform the function corresponding to the command under a control of the processor. The command may include codes created or executed by a compiler or an interpreter.

Hereinafter, although exemplary embodiments of the present disclosure have been illustrated and described, the present disclosure is not limited to the above-described specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

**Claims**

1. An electronic device for providing a video call function, comprising:

    a projection unit;
    a camera;
    a sensor configured to obtain information about a distance from an external object;
    a memory configured to store at least one instruction; and
    at least one processor configured to be connected to the projection unit, the camera, th e sensor, and the memory, and control the electronic device, wherein the at least one processo r is configured to execute the at least one instruction to capture a user through the camera to o btain a first user video based on the video call function being executed,
    calculate a horizontal correction angle and a vertical correction angle based on the firs t user video, a rotational angle of the camera, a projection angle of the projection unit, and a s ensing value obtained through the sensor,
    obtain a frontal video of the user based on the first user video, the horizontal correctio n angle, and the vertical correction angle, and
    control the projection unit so that a video call screen including the obtained frontal vid eo of the user is projected.

2. The electronic device as claimed in claim 1, wherein the at least one processor is configured to obtain information about a first distance between the electronic device and a center of a projection surface based on a first sensing value obtained through the sensor,

    obtain information about a second distance between the electronic device and a face of the user based on a second sensing value obtained through the sensor, and
    calculate the horizontal correction angle based on the information about the first distance, the information about the second distance, and a first rotational angle of the camera.

3. The electronic device as claimed in claim 2, wherein the at least one processor is configured to obtain information about a first height from a floor to the center of the projection surface based on the projection angle of the projection unit and the second sensing value obtained through the sensor,

    obtain information about a second height from the floor to the face of the user based on a second rotational angle of the camera and the second sensing value obtained through the sensor,
    obtain information about a third distance between the face of the user and the center of the projection surface based on the information about the first distance, the information about the second distance, and the second rotational angle of the camera, and
    calculate the vertical correction angle based on the information about the first height, the information about the second height, and the information about the third distance.

4. The electronic device as claimed in claim 1, wherein the at least one processor is configured to rotate the first user video in a first direction based on the horizontal correction angle and rotate the first user video in a second direction based on the vertical correction angle to obtain the frontal video of the user.

5. The electronic device as claimed in claim 1, wherein the at least one processor is configured to input the first user video, the horizontal correction angle, and the vertical correction angle to a trained neural network model to obtain the frontal video of the user.

6. The electronic device as claimed in claim 1, wherein the at least one processor is configured to generate an avatar video based on the frontal video of the user, and
    control the projection unit so that a video call screen including the generated avatar video is projected.

7. The electronic device as claimed in claim 1, further comprising:

    a driving unit configured to move the electronic device,
    wherein the at least one processor is configured to identify whether the electronic devi ce is located in a space where a video call is possible based on at least one of the first user vid eo, the rotational angle of the camera, the projection angle of the projection unit, and the sensi ng value obtained through the sensor, and
    control the driving unit to move to the space where the video call is possible based on the electronic device being not located in the space where the video call is possible.

8. The electronic device as claimed in claim 1, wherein the at least one processor is configured to obtain a second user video using the camera while performing the video call,

calculate a rotational angle of a face of the user based on the second user video, and
rotate the frontal video of the user based on the calculated rotational angle of the face of the user.

9. The electronic device as claimed in claim 1, wherein the at least one processor is configured to identify a speaker among multiple users based on the multiple users being included in the first user video, and calculate the horizontal correction angle and the vertical correction angle based on the identified speaker.

10. A control method for an electronic device for providing a video call function that includes a projection unit projecting a video, the control method comprising:

obtaining a first user video by capturing a user through a camera based on the video call function being executed;
calculating a horizontal correction angle and a vertical correction angle based on the first user video, a rotational angle of the camera, a projection angle of the projection unit, and a sensing value obtained through a sensor of the electronic device;
obtaining a frontal video of the user based on the first user video, the horizontal correction angle, and the vertical correction angle; and
projecting a video call screen including the obtained frontal video of the user through the projection unit.

11. The control method as claimed in claim 10, wherein the calculating includes:

obtaining information about a first distance between the electronic device and a center of a projection surface based on a first sensing value obtained through the sensor;
obtaining information about a second distance between the electronic device and a face of the user based on a second sensing value obtained through the sensor; and
calculating the horizontal correction angle based on the information about the first distance, the information about the second distance, and a first rotational angle of the camera.

12. The control method as claimed in claim 11, wherein the calculating includes:

obtaining information about a first height from a floor to the center of the projection surface based on the projection angle of the projection unit and the second sensing value obtained through the sensor;
obtaining information about a second height from the floor to the face of the user based on a second rotational angle of the camera and the second sensing value obtained through the sensor;
obtaining information about a third distance between the face of the user and the center of the projection surface based on the information about the first distance, the information about the second distance, and the second rotational angle of the camera; and
calculating the vertical correction angle based on the information about the first height, the information about the second height, and the information about the third distance.

13. The control method as claimed in claim 10, wherein, in the obtaining of the frontal video, the first user video rotates in a first direction based on the horizontal correction angle and the first user video rotates in a second direction based on the vertical correction angle to obtain the frontal video of the user.

14. The control method as claimed in claim 10, wherein, in the obtaining of the frontal video, the first user video, the horizontal correction angle, and the vertical correction angle are input to a trained neural network model to obtain the frontal video of the user.

15. The control method as claimed in claim 10, further comprising:

generating an avatar video based on the frontal video of the user,
wherein, in the projecting, a video call screen including the generated avatar video is projected.

# FIG. 1

# FIG. 2A

# FIG. 2B

# FIG. 3

```
        ┌─────────────┐
        │    START    │
        └─────────────┘
               │
               ▼
┌───────────────────────────────┐
│   EXECUTE VIDEO CALL FUNCTION  │──S310
└───────────────────────────────┘
               │
               ▼
┌───────────────────────────────┐
│    OBTAIN FIRST USER VIDEO BY  │──S320
│  CAPTURING USER THROUGH CAMERA │
└───────────────────────────────┘
               │
               ▼
┌───────────────────────────────┐
│   OBTAIN FRONTAL VIDEO OF USER │──S330
└───────────────────────────────┘
               │
               ▼
┌───────────────────────────────┐
│  OBTAIN SECOND USER VIDEO WHILE│──S340
│     PERFORMING VIDEO CALL      │
└───────────────────────────────┘
               │
               ▼
┌───────────────────────────────┐
│    ANALYZE SECOND USER VIDEO   │──S350
└───────────────────────────────┘
               │
               ▼
┌───────────────────────────────┐
│ CORRECT FRONTAL VIDEO OF USER BASED │──S360
│        ON ANALYSIS RESULT      │
└───────────────────────────────┘
               │
               ▼
        ┌─────────────┐
        │     END     │
        └─────────────┘
```

# FIG. 4

DISTANCE INFORMATION ACQUISITION MODULE — 410

HEIGHT INFORMATION ACQUISITION MODULE — 420

CORRECTION ANGLE CALCULATION MODULE — 430

FRONTAL VIDEO ACQUISITION MODULE — 440

VIDEO ANALYSIS MODULE — 450

VIDEO CORRECTION MODULE — 460

EP 4 525 430 A1

# FIG. 5A

# FIG. 5B

# FIG. 6

# FIG. 7

# FIG. 8

# FIG. 9

# FIG. 10A

# FIG. 10B

# FIG. 11

```
           ┌─────────────┐
           │    START    │
           └─────────────┘
                  │
                  ▼
  ┌───────────────────────────────────────┐
  │      EXECUTE VIDEO CALL FUNCTION       │──S1110
  └───────────────────────────────────────┘
                  │
                  ▼
  ┌───────────────────────────────────────┐
  │   OBTAIN FIRST USER VIDEO BY CAPTURING USER │──S1120
  │            THROUGH CAMERA              │
  └───────────────────────────────────────┘
                  │
                  ▼
  ┌───────────────────────────────────────┐
  │ CALCULATE HORIZONTAL CORRECTION ANGLE AND VERTICAL │──S1130
  │   CORRECTION ANGLE BASED ON FIRST USER VIDEO,  │
  │  ROTATIONAL ANGLE OF CAMERA, PROJECTION ANGLE OF │
  │    PROJECTION UNIT, AND SENSING VALUE ACQUIRED │
  │      THROUGH SENSOR OF ELECTRONIC DEVICE   │
  └───────────────────────────────────────┘
                  │
                  ▼
  ┌───────────────────────────────────────┐
  │ OBTAIN FRONTAL VIDEO OF USER BASED ON FIRST USER │──S1140
  │  VIDEO, HORIZONTAL CORRECTION ANGLE, AND VERTICAL │
  │            CORRECTION ANGLE            │
  └───────────────────────────────────────┘
                  │
                  ▼
  ┌───────────────────────────────────────┐
  │  PROJECT VIDEO CALL SCREEN INCLUDING ACQUIRED │──S1150
  │ FRONTAL VIDEO OF USER THROUGH PROJECTION UNIT │
  └───────────────────────────────────────┘
                  │
                  ▼
           ┌─────────────┐
           │     END     │
           └─────────────┘
```

# FIG. 12

100

111

112 — PROJECTION UNIT

113 — MEMORY

114 — COMMUNICATION INTERFACE

115 — MANIPULATION INTERFACE

116 — INPUT/OUTPUT INTERFACE

PROCESSOR

SPEAKER — 117

MICROPHONE — 118

POWER SUPPLY UNIT — 119

DRIVING UNIT — 120

SENSOR UNIT — 121

# FIG. 13

<table>
<tr><td colspan="2" align="center">**INTERNATIONAL SEARCH REPORT**</td><td>International application No.<br>**PCT/KR2023/007185**</td></tr>
</table>

| A. | CLASSIFICATION OF SUBJECT MATTER |
|---|---|

**H04N 7/14**(2006.01)i; **H04N 9/31**(2006.01)i; **G06T 3/60**(2006.01)i; **H04N 7/15**(2006.01)i; **H04N 5/262**(2006.01)i; **G03B 17/54**(2006.01)i

According to International Patent Classification (IPC) or to both national classification and IPC

| B. | FIELDS SEARCHED |
|---|---|

Minimum documentation searched (classification system followed by classification symbols)

H04N 7/14(2006.01); B25J 13/00(2006.01); G03B 21/00(2006.01); G03B 21/14(2006.01); G03B 21/60(2006.01); G06T 3/00(2006.01); H04N 5/225(2006.01); H04N 5/232(2006.01); H04N 5/74(2006.01); H04N 7/18(2006.01); H04N 9/31(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프로젝터(projector), 카메라(camera), 정면 얼굴(front face), 보정(calibration), 각도(angle)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2336246 B1 (LG ELECTRONICS INC.) 06 December 2021 (2021-12-06)<br>See paragraphs [0041]-[0118]. | 1-15 |
| A | JP 2005-176226 A (OLYMPUS CORP.) 30 June 2005 (2005-06-30)<br>See paragraph [0033] and claim 5. | 1-15 |
| A | JP 2017-188766 A (LENOVO SINGAPORE PTE LTD.) 12 October 2017 (2017-10-12)<br>See paragraph [0008]. | 1-15 |
| A | JP 2019-215811 A (PANASONIC IP MANAGEMENT CORP.) 19 December 2019 (2019-12-19)<br>See claims 1, 5 and 6. | 1-15 |
| A | WO 2020-256188 A1 (LG ELECTRONICS INC.) 24 December 2020 (2020-12-24)<br>See paragraphs [0060]-[0111]. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **29 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="2" rowspan="2" style="text-align:center">INTERNATIONAL SEARCH REPORT<br>Information on patent family members</th><th colspan="2">International application No.<br><br>**PCT/KR2023/007185**</th></tr>
</table>

| Patent document<br>cited in search report | | | Publication date<br>(day/month/year) | Patent family member(s) | | | Publication date<br>(day/month/year) |
|---|---|---|---|---|---|---|---|
| KR | 10-2336246 | B1 | 06 December 2021 | US | 10893245 | B1 | 12 January 2021 |
| | | | | US | 2020-0404232 | A1 | 24 December 2020 |
| | | | | WO | 2020-256188 | A1 | 24 December 2020 |
| JP | 2005-176226 | A | 30 June 2005 | None | | | |
| JP | 2017-188766 | A | 12 October 2017 | None | | | |
| JP | 2019-215811 | A | 19 December 2019 | JP | 7145432 | B2 | 03 October 2022 |
| | | | | US | 10776898 | B2 | 15 September 2020 |
| | | | | US | 2019-0385272 | A1 | 19 December 2019 |
| WO | 2020-256188 | A1 | 24 December 2020 | KR | 10-2020-0145642 | A | 30 December 2020 |
| | | | | KR | 10-2336246 | B1 | 06 December 2021 |
| | | | | US | 10893245 | B1 | 12 January 2021 |
| | | | | US | 2020-0404232 | A1 | 24 December 2020 |

Form PCT/ISA/210 (patent family annex) (July 2022)